# FASCICULE DE BREVET EUROPEEN

(11) **EP 2 004 751 B1**
(45) Date de publication et mention de la délivrance du brevet: **12.05.2010**
(21) Numéro de dépôt: 07727722.6
(22) Date de dépôt: 03.04.2007
(51) Int. Cl.: C08L 77/00, B29B 9/06, B29B 9/12

(54) **PROCEDE DE PREPARATION DE PARTICULES A BASE DE POLYMERE THERMOPLASTIQUE**
VERFAHREN ZUR HERSTELLUNG VON PARTIKELN AUF DER BASIS VON THERMOPLASTISCHEM POLYMER
PROCESS FOR PREPARING PARTICLES BASED ON A THERMOPLASTIC POLYMER

(30) Priorité: 10.04.2006 FR 0603142
(43) Date de publication de la demande: 24.12.2008
(73) Titulaire: Rhodia Opérations, 93306 Aubervilliers (FR)
(72) Inventeur: HERVE, Pascal, 69002 Lyon (FR)
(74) Mandataire: Valentino, Cédric
(86) Numéro de dépôt international: PCT/EP2007/053251
(87) Numéro de publication internationale: WO 2007/115977

(56) Documents cités:
- WO-A-00/68298
- WO-A-94/06059
- WO-A-03/002668
- WO-A-2006/040443

## Description

L'invention concerne un procédé de préparation de poudre constituée de particules à base de polymère thermoplastique. Le procédé de l'invention comprend plus particulièrement des étapes de préparation d'un mélange comprenant le polymère thermoplastique et deux additifs à l'état fondu, de refroidissement du mélange et de récupération de la poudre par délitement.

Les polymères thermoplastiques sous forme de poudre, notamment sous la forme de particules sphériques de diamètre généralement inférieur à 1 mm, de préférence inférieur à 100 µm, présentent un intérêt pour de nombreuses applications. En effet des poudres de polymère thermoplastique, telles que les poudres de polyamide, sont utilisées notamment comme additif dans les peintures, par exemple dans les peintures pour revêtement des planchers de salles de sport devant posséder des propriétés antidérapantes. Les poudres de polymère thermoplastique sont également introduites dans des produits cosmétiques telles que les crèmes solaires, pour les soins du corps ou du visage et les démaquillants. Elles sont également utilisées dans le domaine des encres et papiers.

Différents procédés d'obtention de poudres de polymère thermoplastique sont connus de l'homme du métier.

Des poudres de polymère thermoplastique peuvent être obtenues par exemple par broyage ou cryobroyage de granulés de polymère thermoplastique de diamètre moyen initial de l'ordre de 3 mm. Néanmoins ces transformations mécaniques par réduction de taille aboutissent souvent à des particules de forme irrégulière et de taille rarement inférieure à 100 µm. La distribution de taille de ces particules est souvent large et ces dernières peuvent difficilement être mises en oeuvre à l'échelle industrielle.

Il est également connu de préparer des poudres de polymère thermoplastique par dissolution de polymère dans un solvant puis précipitation. Les solvants des polymères tels que le polyamide par exemple, étant très corrosifs et volatils, les conditions de sécurité sont strictes et ce procédé ne peut être mis en oeuvre à une échelle industrielle. De plus il est difficile selon ce procédé de contrôler la forme des particules, ce qui peut être gênant pour certaines applications.

D'autres procédés existent, selon lesquelles les poudres de polymère thermoplastique sont préparées *in situ* lors de la polymérisation des monomères du polymère.

Par exemple, il est connu d'obtenir des poudres de polymère tel que le polyamide par polymérisation anionique de lactames en solution. La polymérisation est réalisée en présence des monomères, d'un solvant des monomères, d'un amorceur, d'un catalyseur, d'un activateur et la polymérisation est réalisée sous agitation à une température voisine de 110°C. Ce procédé est spécifique aux polyamides obtenus à partir de monomères de type lactames. Il est peu flexible et ne permet pas de diversifier la nature des poudres en fonction des propriétés finales de la poudre recherchées, en faisant varier la nature des monomères par exemple. Il est également connu d'obtenir des poudres de copolyesteramide par polymérisation anionique de lactames et de lactones. Ces procédés par voie polymérisation anionique sont difficiles à maîtriser du fait de la grande réactivité de la voie anionique notamment.

Suivant le domaine d'application des poudres, la taille requise des particules de la poudre varie. Par exemple dans le domaine de la peinture et des vernis, la taille requise des particules varie de 0.1 à 10 µm ; dans le domaine de la cosmétique les poudres ont une taille de particules comprise entre 5 et 10 µm ; dans le domaine du rotomoulage la taille des particules varie de 300 à 500 µm. Ainsi on recherche des poudres ayant une taille de particules déterminée et ciblée, ainsi que des procédés flexibles de préparation de poudre permettant de diversifier la taille des particules de la poudre.

Un des buts de l'invention est de proposer un procédé de fabrication d'une poudre de matière thermoplastique comprenant des particules de taille déterminée, pouvant être de faible dimension, et de forme sensiblement régulière, présentant les avantages mentionnés ci-dessus.

A cet effet, l'invention propose un procédé de fabrication de poudre de matériau thermoplastique comprenant des particules de diamètre moyen déterminé et inférieur à 1 mm selon la revendication 1.

Selon une caractéristique avantageuse de l'invention, la formation du mélange est obtenue par fusion de matériau thermoplastique et addition de l'additif A et du composé B sous forme solide ou fondu et application d'une énergie de mélange pour obtenir la formation des particules discrètes de matériau thermoplastique dispersées dans une phase avantageusement continue formée par l'additif A et le composé B.

Ce mélange peut être obtenu dans un autre mode de réalisation de l'invention, par mélange à l'état solide de particules dudit matériau thermoplastique P et des particules dudit additif A et des particules dudit composé B, et fusion du mélange de particules avec application sur le mélange fondu d'une énergie de mélange pour obtenir la formation de particules discrètes de matériau thermoplastique P dispersées dans une phase avantageusement continue formée par le composé A et le composé B.

L'additif A et le composé B peuvent être ajoutés simultanément ou successivement.
Lorsque l'additif A et le composé B sont ajoutés successivement, l'additif A est de préférence ajouté avant le composé B.

On définit les rapports massique R1 et R2 comme suit :
R₁ est le rapport massique (masse d'additif A + masse de composé B)/(masse d'additif A + masse de composé B + masse de matériau P)
R₂ est le rapport massique (masse de composé B)/(masse d'additif A+ masse de composé B).

Pour un système donné matériau P/additif A/composé B, il existe généralement une relation linéaire, pour une taille de particules choisie, entre R₁ et R₂. Cette relation linéaire peut varier en fonction des conditions de mélange du système P/additif A/composé B.

Ainsi le choix judicieux du rapport R₁ et du rapport R₂ tels que définis ci-dessus dans le procédé de l'invention permet notamment l'obtention de poudres de particules de diamètre moyen déterminé. Le procédé de l'invention permet de maîtriser la taille des particules de la poudre. Il permet l'obtention de poudres dont la taille de particules est choisie et ciblée. Le procédé est flexible, la taille des particules de la poudre pouvant être choisie dans une large gamme comprise notamment entre 0.1 et 800 µm.

Avantageusement l'additif A, le composé B et le matériau thermoplastique P sont introduits à l'étape a) selon un rapport massique R₁ (additif A + composé B)/(additif A + composé B + matériau P) compris entre 0.01 et 0.6, de préférence compris entre 0.01 et 0.5.

Selon encore une autre caractéristique de l'invention, la concentration pondérale en additif A dans le mélange avantageusement comprise entre 1% et 50%, de préférence comprise entre 3 et 30%.

Selon encore une autre caractéristique de l'invention, la concentration pondérale en additif B dans le mélange est avantageusement comprise entre 1% et 50%, de préférence comprise entre 3 et 30%.

Plus généralement, le mélange peut être obtenu par tout dispositif convenable tel que les mélangeurs à vis sans fin ou à agitateurs compatible avec les conditions de température et de pression utilisées pour la mise en oeuvre des matériaux thermoplastiques.
Selon un mode de réalisation préféré de l'invention, le mélange fondu est mis en forme avant l'étape de refroidissement, par exemple sous forme de filaments ou joncs. Cette mise en forme peut être avantageusement réalisée par un procédé d'extrusion à travers une filière.

Selon un mode de réalisation préféré de l'invention, notamment quand le mélange fondu est mis en forme, ce mélange fondu est préférentiellement réalisé dans une extrudeuse alimentant la filière d'extrusion.

Le refroidissement du mélange fondu peut être réalisé par tout moyen approprié.
Parmi ceux-ci, le refroidissement pneumatique ou le trempage dans un liquide sont préférés.

L'étape de récupération de la poudre de matériau thermoplastique consiste avantageusement, en un traitement de délitement des particules discrètes de matériau thermoplastique. Ce délitement peut être obtenu par application d'une force de cisaillement sur le mélange refroidi.

Par délitement on entend l'action qui consiste à désolidariser les particules discrètes de matériau thermoplastique des autres éléments du mélange.

Selon un autre mode de réalisation de l'invention, le délitement des particules en matériau thermoplastique est obtenu par trempage du mélange fondu refroidi dans un liquide, non solvant du matériau thermoplastique et avantageusement solvant de l'additif A et du composé B.

Le procédé de l'invention permet de fabriquer des poudres à partir de tout matériau thermoplastique.

A titre d'exemple de polymère thermoplastique, on peut citer les polyamides, les polyesters, les polyuréthanes, les polyoléfines telles que le polyéthylène ou le polypropylène, le polystyrène etc.

Selon un mode de réalisation particulier du procédé de l'invention, les polymères thermoplastiques préférés sont les polyamides.

Tout polyamide connu de l'homme du métier peut être utilisé dans le cadre de l'invention. Le polyamide est généralement un polyamide du type de ceux obtenus par polycondensation à partir de diacides carboxyliques et de diamines, ou du type de ceux obtenus par polycondensation de lactames et/ou aminoacides. Le polyamide de l'invention peut être un mélange de polyamides de différents types et/ou du même type, et/ou des copolymères obtenus à partir de différents monomères correspondant au même type et/ou à des types différents de polyamide.

A titre d'exemple de polyamide pouvant convenir pour l'invention, on peut citer le polyamide 6, le polyamide 6,6, le polyamide 11, le polyamide 12, les polyamides 4,6 ; 6,10 ; 6,12 ; 12,12, 6,36 ; les polyamides semi-aromatiques, par exemple les polyphtalamides obtenus à partir d'acide téréphtalique et/ou isophtalique tels que le polyamide commercialisé sous le nom commercial AMODEL, leurs copolymères et alliages.

Selon un mode de réalisation préférentiel de l'invention, le polyamide est choisi parmi le polyamide 6, le polyamide 6,6, leurs mélanges et copolymères.

Selon un mode particulier de réalisation de l'invention, le polymère thermoplastique est un polymère comprenant des chaînes macromoléculaires étoile. Les polymères comprenant de telles chaînes macromoléculaires étoiles sont par exemple décrits dans les documents FR 2.743.077, FR 2.779.730, US 5.959.069, EP 0.632.703, EP 0.682.057 et EP 0.832.149. Ces composés sont connus pour présenter une fluidité améliorée par rapport à des polyamides linéaires de même masse moléculaire.

Selon un autre mode de réalisation particulier de l'invention, le polymère thermoplastique est un polycondensat constitué de :
- 30 à 100% molaire (bornes comprises) de chaînes macromoléculaires répondant à la formule (I) suivante :

   R₃-(X-R₂-Y)ₙ-X-A-R₁-A-X-(Y-R₂-X)ₘ-R₃ (I)
- 0 à 70% molaire (bornes comprises) de chaînes macromoléculaires répondant à la formule (II) suivante

   R₄-[Y-R₂-X]ₚ-R₃ (II)
dans lesquelles
-X-Y- est un radical issu de la polycondensation de deux fonctions réactives F₁ et F₂ telles que
- F₁ est le précurseur du radical -X- et F₂ le précurseur du radical -Y- ou inversement,
- les fonctions F₁ ne peuvent réagir entre elles par condensation
- les fonctions F₂ ne peuvent réagir entre elles par condensation
- A est une liaison covalente ou un radical hydrocarboné aliphatique pouvant comprendre des hétéroatomes et comprenant de 1 à 20 atomes de carbone.
- R₂ est un radical hydrocarboné aliphatique ou aromatique ramifié ou non comprenant de 2 à 20 atomes de carbone.
- R₃, R₄ représente l'hydrogène, un radical hydroxyle ou un radical hydrocarboné
- R₁ est un radical hydrocarboné comprenant au moins 2 atomes de carbone, linéaire ou cyclique, aromatique ou aliphatique et pouvant comprendre des hétéroatomes.
- n, m et p représentent chacun un nombre compris entre 50 et 500, préférentiellement entre 100 et 400.

Un tel polycondensat est décrit dans la demande WO 05/019510 incorporée par référence. Avantageusement le polycondensat est un polyamide constitué de :
- 30 à 100% molaire (bornes comprises) de chaînes macromoléculaires répondant à la formule (I) suivante :

   R₃-(X-R₂-Y)ₙ-X-A-R₁-A-X-(Y-R₂-X)ₘ-R₃ (I)
- 0 à 70% molaire (bornes comprises) de chaînes macromoléculaires répondant à la formule (II) suivante

   R₄-[Y-R₂-X]ₚ-R₃ (II)
dans lesquelles :
- Y est le radical 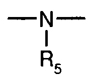 quand X représente le radical 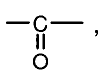
- Y est le radical 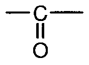 quand X représente le radical 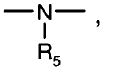
- A est une liaison covalente ou un radical hydrocarboné aliphatique pouvant comprendre des hétéroatomes et comprenant de 1 à 20 atomes de carbone.
- R₂ est un radical hydrocarboné aliphatique ou aromatique ramifié ou non comprenant de 2 à 20 atomes de carbone.
- R₃, R₄ représente l'hydrogène, un radical hydroxyle ou un radical hydrocarboné comprenant un groupement 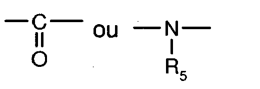
- R₅ représente l'hydrogène ou un radical hydrocarboné comprenant de 1 à 6 atomes de carbone
- R₁ est un radical hydrocarboné comprenant au moins 2 atomes de carbone, linéaire ou cyclique, aromatique ou aliphatique et pouvant comprendre des hétéroatomes.
- n, m et p représentent chacun un nombre compris entre 50 et 500, préférentiellement entre 100 et 400.

Les polymères thermoplastiques utilisés dans l'invention peuvent contenir différents additifs tels que matifiants, stabilisants chaleur, stabilisants lumière, pigments, colorants, charges, notamment charges abrasives. A titre d'exemple, on peut notamment citer l'oxyde de titane; l'oxyde de zinc, l'oxyde de cérium, la silice ou le sulfure de zinc utilisés comme matifiant et/ou abrasif.

Le procédé de l'invention peut mettre en oeuvre un ou plusieurs additifs A.

Selon une autre caractéristique de l'invention, l'additif A est, avantageusement, un polymère du type bloc, séquencé, peigne, hyperbranché ou étoile. Ainsi, la structure compatible avec le matériau thermoplastique forme un bloc, une séquence, le squelette ou les dents du peigne, le coeur ou les branches du polymère étoile ou de l'hyperbranché.

Selon un mode de réalisation préféré de l'invention, la structure compatible de l'additif A comprend des fonctions chimiquement identiques à celles du polymère thermoplastique P.

Selon le mode de réalisation préféré de l'invention, l'additif A est choisi dans le groupe constitué par un polymère D défini ci-dessous ou un polymère hyperbranché E comprenant au moins un bloc de polyoxyde d'alkylène.
Ledit polymère D est un polymère à propriétés thermoplastiques comprenant un bloc de polymère thermoplastique et au moins un bloc de polyoxyde d'alkylène tels que :
- le bloc de polymère thermoplastique comprend une chaîne macromoléculaire étoile ou H comprenant au moins un coeur multifonctionnel et au moins une branche ou un segment de polymère thermoplastique relié au coeur, le coeur comprenant au moins trois fonctions réactives identiques
- le ou les blocs de polyoxyde d'alkylène sont reliés à au moins une partie des extrémités libres de la chaîne macromoléculaire étoile ou H, choisie parmi les extrémités de branche ou segment de polymère thermoplastique et les extrémités du coeur multifonctionnel

De tels polymères thermoplastiques et leur procédé d'obtention sont notamment décrits dans le document WO 03/002668.

La chaîne macromoléculaire étoile du polymère D est avantageusement un polyamide étoile obtenu par copolymérisation à partir d'un mélange de monomères comprenant :
a) un composé multifonctionnel comprenant au moins trois fonctions réactives identiques choisies parmi la fonction amine et la fonction acide carboxylique
b) des monomères de formules générales (IIa) et/ou (IIb) suivantes : 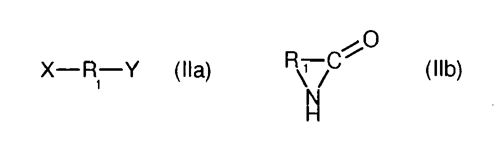
c) le cas échéant des monomères de formule générale (III) suivante :

   Z-R₂-Z (III)
dans lesquelles :
- Z représente une fonction identique à celle des fonctions réactives du composé multifonctionnel
- R₁, R₂ représentent des radicaux hydrocarbonés aliphatiques, cycloaliphatiques ou aromatiques, substitués ou non, identiques ou différents, comprenant de 2 à 20 atomes de carbone, et pouvant comprendre des hétéroatomes,
- Y est une fonction amine primaire quand X représente une fonction acide carboxylique, ou
- Y est une fonction acide carboxylique quand X représente une fonction amine primaire.

La chaîne macromoléculaire H du bloc de polymère thermoplastique du polymère D est avantageusement un polyamide H obtenu par copolymérisation à partir d'un mélange de monomères comprenant :
a) un composé multifonctionnel comprenant au moins trois fonctions réactives identiques choisies parmi la fonction amine et la fonction acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique,
   les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

Avantageusement, le composé multifonctionnel des chaînes macromoléculaires étoile ou H est représenté par la formule (IV) 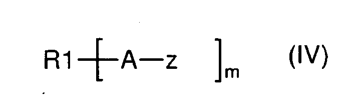 dans laquelle :
- R₁ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un radical acide carboxylique
- m est un nombre entier compris entre 3 et 8.

De préférence le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

Le bloc de polyoxyde d'alkylène POA du polymère D est de préférence linéaire. Il peut être choisi parmi les blocs polyoxyde d'éthylène, polytriméthylène oxyde, polytetraméthylène oxyde. Dans le cas où le bloc est à base de polyoxyde d'éthylène, il peut comporter aux extrémités du bloc des motifs propylène glycol. Le bloc de polyoxyde d'alkylène du polymère D est de préférence un bloc de polyoxyde d'éthylène.

Avantageusement toutes les extrémités libres de la chaîne macromoléculaire du bloc de polymère themoplastique du polymère D sont reliées à un bloc de polyoxyde d'alkylène.

Par polymère hyperbranché E selon l'invention, on entend une structure polymérique ramifiée obtenue par polymérisation en présence de composés ayant une fonctionnalité supérieure à 2, et dont la structure n'est pas parfaitement contrôlée. Il s'agit souvent de copolymères statistiques. Les polymères hyperbranchés peuvent par exemple être obtenus par réaction entre, notamment, des monomères plurifonctionnels, par exemple trifonctionnels et bifonctionnels, chacun des monomères étant porteur d'au moins deux fonctions réactives différentes de polymérisation.

Avantageusement le polymère hyperbranché E de l'invention est choisi parmi les polyesters, les polyesteramides et les polyamides hyperbranchés.

Le polymère hyperbranché E de l'invention est de préférence un copolyamide hyperbranché du type de ceux obtenus par réaction entre :
- au moins un monomère de formule (**I**) suivante :

   (**I**) **A-**R-**B**_{f}
dans laquelle **A** est une fonction réactive de polymérisation d'un premier type, **B** est une fonction réactive de polymérisation d'un second type et capable de réagir avec **A,** R est une entité hydrocarbonée, et f est le nombre total de fonctions réactives **B** par monomère : f ≥ 2, de préférence 2 ≤ f ≤ 10 ;
- au moins un monomère dé formule (**II**) suivante :

   (**II**) **A**'-R'-**B**' ou les lactames correspondants,

   dans laquelle **A', B', R'** ont la même définition que celle donnée ci-dessus respectivement pour **A, B, R** dans la formule (**I**)
- au moins un monomère « coeur » de formule (**III**) suivante ou au moins un monomère « limiteurs de chaîne » de formule (**IV**) suivante :

   (**III**) R¹(**B**")ₙ
dans laquelle :
- R' est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
- **B"** est une fonction réactive de même nature que **B** ou **B' ;**
- n ≥ 1, de préférence 1 ≤ n ≤ 100

   (**IV**) R²-**A**"
dans laquelle :
- R² est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.
- et **A"** est une fonction réactive de même nature que **A** ou **A'.** le rapport molaire **I/II** se définissant comme suit :
   0,05 < **I/II**
   et de préférence 0,125 ≤ **I/II** ≤ 2 ;
au moins l'une des entités **R** ou **R'** d'au moins l'un des monomères (**I**) ou (**II**) étant aliphatique, cycloaliphatique ou arylaliphatique R₁ et/ou R₂ étant des radicaux polyoxyalkylènes

De tels copolyamides sont décrits dans le document WO 00/68298 A1, notamment à la page 11 lignes 3 à 6.

Les fonctions réactives de polymérisation **A, B, A', B'** sont avantageusement choisies dans le groupe comprenant les fonctions carboxyliques et amines.

Le monomère de formule (I) du copolyamide hyperbranché est avantageusement un composé dans lequel **A** représente la fonction amine, **B** la fonction carboxylique, R un radical aromatique et f = 2.

R₁ et/ou R₂ sont avantageusement des radicaux polyoxyalkylènes aminés de type Jeffamine®.

Le composé B du procédé de l'invention est insoluble et non compatible avec le matériau thermoplastique P. Avantageusement ce composé B a une structure chimique compatible avec au moins une partie de la structure de l'additif A, notamment la partie de structure de A non compatible avec le composé P. De préférence le composé B est un homopolymère de la partie non compatible de l'additif A. Comme exemple de composés B convenables pour l'invention, on peut citer les composés appartenant aux familles des polysaccharides, polyoxyalkylèneglycols, polyoléfines, silicones, les cires etc. Le composé B peut être ajouté de manière séparée de l'additif A ou sous forme de mélange avec au moins une partie de l'additif A. Le procédé de l'invention peut mettre en oeuvre un ou plusieurs composés B.

Il peut également être pré mélangé avec le matériau P.

Toute méthode connue de l'homme du métier pour préparer un mélange peut être utilisée pour préparer le mélange selon l'invention. On peut par exemple réaliser un mélange intime des granulés de polymère thermoplastique P d'additif A et de composé B, ou un mélange des granulés de polymère thermoplastique P, des granulés de l'additif A et des granulés du composé B. Le polymère thermoplastique P peut également se présenter sous la forme de granulés, que l'on enrobe par l'additif A et/ou le composé B. L'additif A et le composé B peuvent être introduits dans le polymère P lors du procédé de polymérisation, avantageusement en fin de polymérisation. Il est également possible d'introduire l'additif A et le composé B dans le polymère à l'état fondu.

L'étape a) consiste à préparer le mélange à l'état fondu, sous agitation.

Cette étape est avantageusement réalisée dans tout dispositif de malaxage compatible avec les conditions de pression et température de mise en oeuvre des matériaux thermoplastiques. L'étape a) est de préférence réalisée dans une extrudeuse, encore plus préférentiellement dans une extrudeuse bi-vis ou multivis.

Le mélange peut être préparé selon un mode décrit ci-dessus, puis introduit dans le dispositif d'extrusion mis en oeuvre lors de l'étape a). Le mélange peut être introduit sous forme solide ou liquide, par exemple à l'état fondu.

Le mélange peut également être préparé *in situ* dans le même dispositif d'extrusion que celui mis en oeuvre lors de l'étape a).

L'agitation lors de l'étape a) permet un cisaillement de la composition et un mélange efficace du matériau thermoplastique, de l'additif A et du composé B. L'énergie de cisaillement appliquée est déterminée en fonction de la nature des produits à mélanger et de la taille souhaitée des particules de matériau thermoplastique.

Le mélange, avant d'être refroidi selon l'étape b), peut être extrudé à travers une filière pour être mise en forme de jonc, de fil, de film d'une manière classique et connue de l'homme du métier.

L'étape b) consiste à refroidir le mélange pour solidifier au moins le polymère thermoplastique. Ce refroidissement peut être réalisé de manière classique à l'aide d'air ou d'eau
L'étape de délitement des particules de polymère thermoplastique à partir du mélange refroidi peut être mise en oeuvre selon différents procédés.
Ainsi, un premier procédé consiste en l'application d'une force mécanique , telle qu'un frottement, un cisaillement, une torsion, nécessaire pour provoquer ce délitement ;
Dans un autre mode de réalisation, le délitement intervient instantanément quand le mélange refroidi est introduit dans un liquide tel que de l'eau, par exemple.
Dans encore un autre mode de réalisation, le liquide est avantageusement un solvant de l'additif A et du composé B . Ainsi, il est possible de récupérer, en grande partie, l'additif A et le composé B pour pouvoir, par exemple le réutiliser. De plus, la poudre de polymère thermoplastique comprendra une quantité plus faible d'impuretés, d'additif A et de composé B.
Dans d'autres cas, il peut être intéressant de ne pas éliminer l'additif A qui restera présent à la surface des particules de matériau thermoplastique, modifiant ainsi les propriétés de surface de ces particules.

Avantageusement les étapes b) et c) sont réalisées simultanément. Par exemple on peut introduire le mélange après extrusion à travers une filière directement dans un réacteur comprenant un solvant de l'additif A et du composé B et un non-solvant du polymère P.

Les particules de polymère P sont éventuellement isolées de la solution solvant/additif A/composé B. L'isolement peut être réalisé par tout moyen permettant de séparer d'une phase liquide, une phase solide en suspension. L'isolement peut consister par exemple en une filtration, une décantation, une centrifugation, une atomisation.

S'il s'agit par exemple d'une dispersion aqueuse, l'isolement peut être réalisé par exemple par atomisation pour récupérer une poudre comprenant des particules élémentaires de taille équivalente à celles présentes dans la dispersion et/ou des agrégats de particules. Ces agrégats sont généralement facilement redispersables dans un milieu aqueux tel que l'eau ou cassés par application de vibrations sur la poudre. D'autres moyens d'élimination de l'eau ou récupération de la poudre peuvent être utilisés tels que la filtration ou la centrifugation puis le séchage du gâteau de filtration.

Les particules de polymère P ainsi obtenues peuvent être lavées et séchées.

Le procédé de l'invention permet l'obtention de particules à géométrie contrôlée, notamment en ajustant l'agitation lors de l'étape a), la nature des composés A et/ou B, la température et la concentration des différents composants du mélange.

Avantageusement les particules obtenues selon le procédé de l'invention sont des particules sphériques.

Par particule sphérique, on entend une particule de forme essentiellement sphérique.

Avantageusement le diamètre moyen de particules souhaité selon le procédé de l'invention est avantageusement compris entre 0.1 et 800 µm. Le diamètre souhaité varie en fonction des domaines d'application des poudres. La taille de particules des poudres de l'invention est maîtrisée, la distribution des la taille des particules est généralement uni modale.

Par diamètre moyen, on entend la valeur du pic modal de la distribution uni modale de la taille des particules.

La distribution de taille des particules est généralement déterminée par granulométrie laser selon une méthode connue de l'homme du métier.

Les particules peuvent également être de forme polyhédrique régulier ou irrégulier.
Ces particules constituant la poudre de matériau thermoplastique ont généralement un volume poreux égal ou voisin de 0 cm³/g car les particules ne présentent aucune porosité.

D'autres détails ou avantages de l'invention apparaîtront plus clairement à la vue des exemples donnés ci-dessous et en référence à la figure annexée, qui représente une photographie de la dispersion obtenue.

### EXEMPLES

Les matières utilisées dans les exemples sont les suivantes :
**Polymère P** : polyamide 66 de viscosité relative de 2.6
**Additif A** : copolymère polyamide - polyoxyde d'alkylène étoile hydrophile réalisé de la façon suivante :
   Dans une autoclave de 7.5 litres équipée d'un agitateur mécanique sont introduits : 1116,0 g d'ε-caprolactame (9,86 mol), 57,6 g d'acide 1,3,5-benzène tricarboxylique (0,27 mol), 1826,4g de Jeffamine ® M2070 (0,82 mol), 1,9 g d'ULTRANOX® 236 et 3,5 g d'une solution aqueuse à 50% (p/p) d'acide hypophosphoreux.
   Le mélange réactionnel est porté à 250°C sous azote et sous pression atmosphérique et maintenu à cette température pendant 1 h. Puis le système est progressivement mis sous vide pendant 30 min jusqu'à une pression de 5 mbars, puis maintenu sous vide pendant une heure supplémentaire. Le système est ensuite coulé sur un plateau.
**Composé B :**
   Composé B1 :Polyoxyde d'éthylène de poids moléculaire 400g/mole,
   Composé B2 :Polyoxyde d'éthylène de poids moléculaire 1 500g/mole,
   Composé B3 :Polyoxyde d'éthylène de poids moléculaire 12 000g/mole
On introduit dans une extrudeuse double vis 24D de type Prism des granulés de Polymère P à l'aide d'une alimentation volumétrique et un mélange de pastilles de l'additif A et de composé B (B1,B2 ou B3) à l'aide d'une alimentation pondérale. Les débits des deux doseurs sont réglés de façon à pouvoir faire varier la concentration en additif A et en composé B dans le mélange avec le polymère thermoplastique P. Les mélanges sont extrudés à un débit fixé entre 1.9 et 2.2 kg/heure. Les températures des différentes plages de l'extrudeuse sont comprises entre 275 et 295°C. La vitesse est fixée à 200 rpm. La pression enregistrée est comprise entre 10 et 13 bars. Les joncs obtenus sont trempés en sortie de filière par un flux d'eau, recueillis dans une panière métallique, égouttés puis séchés.

Les joncs collectés sont ensuite dispersés dans de l'eau par simple agitation mécanique. La dispersion ainsi obtenue est tamisée avec un tamis 200µm pour éliminer les impuretés solides de grande taille telles que des morceaux de jonc non-dispersibles.
Les rendements pondéraux de récupération de polymère thermoplastique P après tamisage sont supérieurs à 90%. La distribution granulométrique des particules contenues dans la dispersion est mesurée à l'aide d'un appareil dénommé MasterSizer 2000 commercialisé par la société Malvern instruments. Cette distribution, exprimée en volume, obtenue après application d'Ultrasons, est unimodale et la valeur rapportée dans les tableaux ci-dessous correspond à la valeur du pic modal.
Différentes poudres ont été obtenues et caractérisées selon le mode opératoire décrit ci-dessus.

### Exemples 1 à 15

Dans ces exemples, on met en oeuvre différentes concentrations d'additif A, et pour chaque concentration d'additif A on fait varier la concentration de composé B afin d'obtenir différentes tailles de particules de poudre (voir tableau 1 ci-dessous).
Les pourcentages ci-dessous sont exprimés en poids par rapport au poids de la composition.

**Tableau 1**

| Exemple | Polymère P | Additif A | Composé B2 | R1 | R2 | Taille |
|---|---|---|---|---|---|---|
| n° | (%) | (%) | (%) | | | (µm) |
| 1 | 76,0 | 5,0 | 19.0 | 0,240 | 0,792 | 10,0 µm |
| 2 | 71,5 | 5,0 | 23,5 | 0,285 | 0,825 | 15,0 µm |
| 3 | 68,0 | 5,0 | 27,0 | 0,320 | 0,844 | 20,0 µm |
| 4 | 66,0 | 5,0 | 29,0 | 0,340 | 0,853 | 25,0 µm |
| 5 | 85,0 | 7,5 | 7,5 | 0,150 | 0,500 | 2,5 µm |
| 6 | 79,5 | 7,5 | 13,0 | 0,205 | 0,634 | 5,0 µm |
| 7 | 73,0 | 7,5 | 19,5 | 0,270 | 0,722 | 10,0 µm |
| 8 | 69,0 | 7,5 | 23,5 | 0,310 | 0,758 | 15,0 µm |
| 9 | 65,5 | 7,5 | 27,0 | 0,345 | 0,783 | 20,0 µm |
| 10 | 63,5 | 7,5 | 29,0 | 0,365 | 0,795 | 25,0 µm |
| 11 | 88,25 | 10,0 | 1,75 | 0,118 | 0,149 | 1,0 µm |
| 12 | 82,75 | 10,0 | 7,25 | 0,173 | 0,420 | 2,5 µm |
| 13 | 77,0 | 10,0 | 13,0 | 0,230 | 0,565 | 5,0 µm |
| 14 | 71,0 | 10,0 | 19,0 | 0,290 | 0,655 | 10,0 µm |
| 15 | 66,5 | 10,0 | 23,5 | 0,335 | 0,701 | 15,0 µm |

### Exemples 16 à 35

Dans ces exemples, on réalise des poudres ayant des tailles de particules variables, et pour chaque taille de particules on fait varier les concentrations d'additif A et de composé B dans la composition (voir tableau 2 ci-dessous).
Les pourcentages ci-dessous sont exprimés en poids par rapport au poids de la composition.

**Tableau 2**

| Exemple | Polymère P | Additif A | Composé B2 | R1 | R2 | Taille |
|---|---|---|---|---|---|---|
| n° | (%) | (%) | (%) | | | (µm) |
| 16 comparatif | 83,5 | 16,5 | 0,0 | 0,165 | 0,000 | 1,0 µm |
| 17 | 84,2 | 15,0 | 0,8 | 0,158 | 0,051 | 1,0 µm |
| 18 | 84,8 | 14,0 | 1,2 | 0,152 | 0,079 | 1,0 µm |
| 19 | 86,5 | 12,0 | 1,5 | 0,135 | 0,111 | 1,0 µm |
| 20 | 89,1 | 9,0 | 1,9 | 0,109 | 0,174 | 1,0 µm |
| 21 | 71,0 | 26,0 | 3,0 | 0,290 | 0,103 | 2,5 µm |
| 22 | 69,0 | 19,5 | 5,0 | 0,245 | 0,204 | 2,5 µm |
| 23 | 78,5 | 15,0 | 6,5 | 0,215 | 0,302 | 2,5 µm |
| 24 | 81,5 | 11,0 | 7,5 | 0,185 | 0,405 | 2,5 µm |
| 25 | 68,0 | 22,5 | 9,5 | 0,320 | 0,297 | 5,0 µm |
| 26 | 71,0 | 17,5 | 11,5 | 0,290 | 0,397 | 5,0 µm |
| 27 | 75,0 | 12,5 | 12,5 | 0,250 | 0,500 | 5,0 µm |
| 28 | 78,5 | 8,5 | 13,0 | 0,215 | 0,605 | 5,0 µm |
| 29 | 82,0 | 5,5 | 12,5 | 0,180 | 0,694 | 5,0 µm |
| 30 | 65,0 | 17,5 | 17,5 | 0,350 | 0,500 | 10,0 µm |
| 31 | 68,5 | 12,5 | 19,0 | 0,315 | 0,603 | 10,0 µm |
| 32 | 72,0 | 8,5 | 19,5 | 0,280 | 0,696 | 10,0 µm |
| 33 | 72,5 | 4,0 | 23,5 | 0,275 | 0,855 | 15,0 µm |
| 34 | 69,5 | 4,0 | 26,5 | 0,305 | 0,869 | 20,0 µm |
| 35 | 67,0 | 4,0 | 29,0 | 0,330 | 0,879 | 25,0 µm |

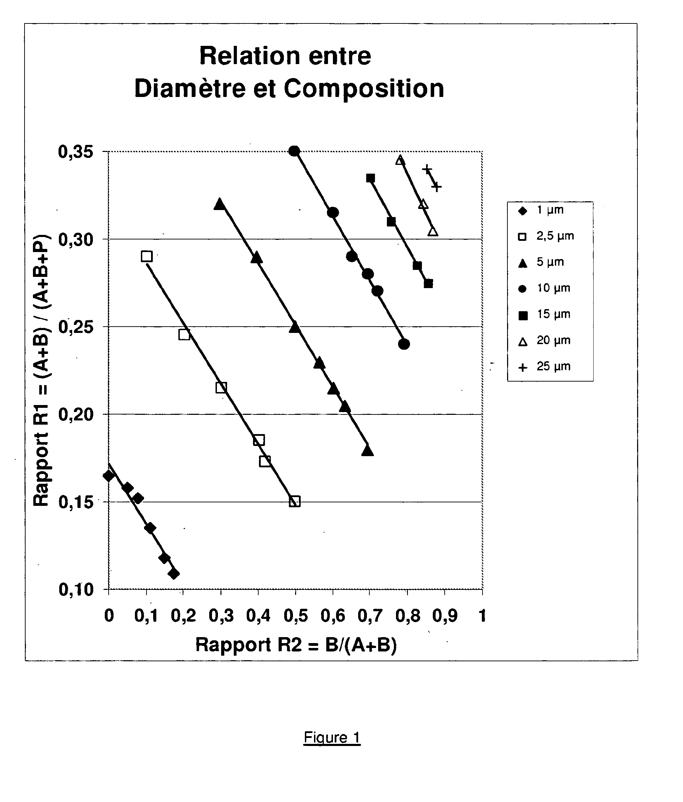

La figure 1, correspondant aux exemples 1 à 35, illustre la relation linéaire entre les rapports massiques R1 et R2 pour une taille de particules donnée.

### Exemples 36 à 44

Dans ces exemples, on réalise des poudres avec les composés B1 et B3 (voir tableau 3 ci-dessous).
Les pourcentages ci-dessous sont exprimés en poids par rapport au poids de la composition.

**Tableau 3**

| Exemple n° | Polymère P (%) | Additif A (%) | Nature du Composé B | Composé B (%) | Taille (µm) |
|---|---|---|---|---|---|
| 36 (comparatif) | 75,0 | 0,0 | B1 | 25,0 | Jonc non dispersible |
| 37 | 87,0 | 11,0 | B1 | 2,0 | 0,95 µm |
| 38 | 80,0 | 17,5 | B1 | 2,5 | 1,5 µm |
| 39 | 80,0 | 12,5 | B1 | 7,5 | 3,3 µm |
| 40 (comparatif) | 89,0 | 0 | B3. | 11,0 | Jonc non dispersible |
| 41 | 88,5 | 9,2 | B3 | 2,3 | 1,1 µm |
| 42 (comparatif) | 79,0 | 0,0 | B3 | 21,0 | Jonc non dispersible |
| 43 | 80,0 | 8,0 | B3 | 12,0 | 1,7 µm |
| 44 | 80,0 | 16,0 | B3 | 4,0 | 1,4 µm |

## Revendications

1. Procédé de fabrication de poudre en matériau thermoplastique P comprenant des particules de diamètre moyen déterminé et inférieur à 1 mm, comprenant les étapes suivantes :
a. Former un mélange fondu dudit matériau thermoplastique P avec au moins un additif A pour obtenir une dispersion de particules discrètes du matériau thermoplastique P, ledit additif A étant formé par un matériau polymérique comprenant au moins une partie de sa structure compatible avec ledit matériau thermoplastique P et au moins une partie de sa structure incompatible et insoluble dans ledit matériau thermoplastique P pour obtenir une dispersion de particules discrètes de matériau,
b. Refroidir ledit mélange à une température inférieure à la température de ramollissement du matériau thermoplastique P,
c. Traiter ledit mélange refroidi pour provoquer le délitement des particules discrètes de matériau thermoplastique P
**caractérisé en ce que** l'on introduit à l'étape a) au moins un composé B insoluble et non compatible avec le matériau thermoplastique P, pour obtenir des particules de diamètre moyen souhaité ; le composé B a une structure compatible avec au moins une partie de la structure de l'additif A ;
le rapport massique R₁ (masse d'additif A + masse de composé B)/(masse d'additif A + masse de composé B + masse de matériau P) est compris entre 0.01 et 0.6.

2. Procédé selon la revendication 1, **caractérisé en ce que** la formation du mélange est obtenue par fusion de matériau thermoplastique P et addition de l'additif A et du composé B sous forme solide ou fondu et application d'une énergie de mélange pour obtenir la formation des particules discrètes de matériau thermoplastique.

3. Procédé selon la revendication 1, **caractérisé en ce que** la formation du mélange est obtenue par mélange à l'état solide de particules dudit matériau thermoplastique P et des particules dudit additif A et des particules dudit composé B, et fusion du mélange de particules avec application sur le mélange fondu d'une énergie de mélange pour obtenir la formation de particules discrètes de matériau thermoplastique.

4. Procédé selon l'une des revendications 1 à 3, **caractérisé en ce que** la concentration pondérale en additif A dans le mélange est comprise entre 1 % et 50%

5. Procédé selon l'une des revendications 1 à 4, **caractérisé en ce que** la concentration pondérale en composé B dans le mélange est comprise entre 1 % et 50%

6. Procédé selon l'une des revendications précédentes, **caractérisé en ce que** le mélange fondu est mis en forme avant l'étape de refroidissement.

7. Procédé selon la revendication 6, **caractérisé en ce que** le procédé de mise en forme est un procédé d'extrusion à travers une filière.

8. Procédé selon la revendication 7, **caractérisé en ce que** le mélange fondu est réalisé dans une extrudeuse alimentant la filière d'extrusion.

9. Procédé selon l'une des revendication précédentes, **caractérisé en ce que** le refroidissement est un refroidissement pneumatique.

10. Procédé selon l'une des revendications 1 à 8, **caractérisé en ce** le refroidissement est obtenu par trempage dans un liquide.

11. Procédé selon l'une des revendications précédentes, **caractérisé en ce que** le traitement de délitement des particules en matériau thermoplastique P est obtenu par application d'une force de cisaillement sur le mélange refroidi.

12. Procédé selon l'une de revendications 1 à 10, **caractérisé en ce que** le traitement de délitement des particules en matériau thermoplastique P est obtenu par trempage du mélange fondu refroidi dans un liquide, non solvant du matériau thermoplastique P.

13. Procédé selon la revendication 12, **caractérisé en ce que** le liquide est un solvant de l'additif A et du composé B.

14. Procédé selon l'une des revendications précédentes **caractérisé en ce que** le polymère thermoplastique est un polyamide ou un polyester.

15. Procédé selon la revendication 14, **caractérisé en ce que** le polymère thermoplastique est un polyamide choisi dans le groupe comprenant le polyamide 6, le polyamide 6,6, le polyamide 11, le polyamide 12, les polyamides 4,6 ; 6,10 ; 6,12 ; 12,12, 6,36, leurs copolymères et alliages.

16. Procédé selon l'une des revendications précédentes, **caractérisé en ce que** le polymère thermoplastique comprend des additifs choisis dans le groupe comprenant les matifiants, les stabilisants chaleur et/ou lumière, les pigments, les colorants, les charges, notamment les charges abrasives.

17. Procédé selon l'une des revendications précédentes; **caractérisé en ce que** l'additif A est un polymère du type bloc, séquence, peigne, hyperbranché, étoile.

18. Procédé selon la revendication 17, **caractérisé en ce que** la structure compatible avec le matériau thermoplastique constitue un bloc d'un polymère type bloc, une séquence d'un polymère séquencé, les dents d'un polymère peigne, le coeur ou les branches d'un polymère étoile ou hyperbranché.

19. Procédé selon l'une des revendications précédentes, **caractérisé en ce que** la structure compatible de l'additif A comprend des fonctions identiques à celles du polymère thermoplastique.

20. Procédé selon l'une des revendications précédentes **caractérisé en ce que** l'additif A est un copolymère bloc D comprenant un bloc de polymère thermoplastique et au moins un bloc de polyoxyde d'alkylène tel que :
• le bloc de polymère thermoplastique comprend une chaîne macromoléculaire étoile ou H comprenant au moins un coeur multifonctionnel et au moins une branche ou un segment de polymère thermoplastique relié au coeur, le coeur comprenant au moins trois fonctions réactives identiques
• le ou les blocs de polyoxyde d'alkylène sont reliés à au moins une partie des extrémités libres de la chaîne macromoléculaire étoile ou H, choisie parmi les extrémités de branche ou segment de polymère thermoplastique et les extrémités du coeur multifonctionnel

21. Procédé selon la revendication 20 **caractérisé en ce que** la chaîne macromoléculaire étoile du bloc de polymère thermoplastique du polymère D est un polyamide étoile obtenu par copolymérisation à partir d'un mélange de monomères comprenant :
a) un composé multifonctionnel comprenant au moins trois fonctions réactives identiques choisies parmi la fonction amine et la fonction acide carboxylique
b) des monomères de formules générales (IIa) et/ou (IIb) suivantes : 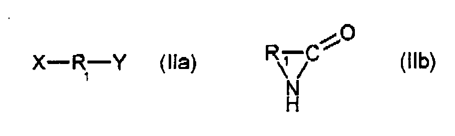
c) le cas échéant des monomères de formule générale (III) suivante :
Z-R₂-Z (III)
dans lesquelles :
• Z représente une fonction identique à celle des fonctions réactives du composé multifonctionnel
• R₁, R₂ représentent des radicaux hydrocarbonés aliphatiques, cycloaliphatiques ou aromatiques, substitués ou non, identiques ou différents, comprenant de 2 à 20 atomes de carbone, et pouvant comprendre des hétéroatomes,
• Y est une fonction amine primaire quand X représente une fonction acide carboxylique, ou
• Y est une fonction acide carboxylique quand X représente une fonction amine primaire,

22. Procédé selon la revendication 20, **caractérisé en ce que** la chaîne macromoléculaire H du bloc de polymère thermoplastique du polymère D est un polyamide H obtenu par copolymérisation à partir d'un mélange de monomères comprenant :
a) un composé multifonctionnel comprenant au moins trois fonctions réactives identiques choisies parmi la fonction amine et la fonction acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique,
les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

23. Procédé selon l'une des revendications 20 à 22, **caractérisé en ce que** le composé multifonctionnel est représenté par la formule (IV) 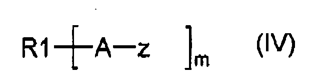 dans laquelle :
• R₁ est un radical hydrocarboné comprenant au moins deux atomes de carbone linéaire ou cyclique, aromatique ou aliphatique et pouvant comprendre des hétéroatomes,
• A est une liaison covalente ou un radical hydrocarboné aliphatique comprenant de 1 à 6 atomes de carbone,
• Z représente un radical amine primaire ou un radical acide carboxylique
• m est un nombre entier compris entre 3 et 8.

24. Procédé selon l'une des revendications 20 à 23, **caractérisé en ce que** le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

25. Procédé selon l'une des revendications 20 à 24, **caractérisé en ce que** le bloc de polyoxyde d'alkylène du polymère D est linéaire.

26. Procédé selon la revendication 25, **caractérisé en ce que** le bloc de polyoxyde d'alkylène du polymère D est un bloc de polyoxyde d'éthylène.

27. Procédé selon l'une des revendications 20 à 26, **caractérisé en ce que** les extrémités libres de la chaîne macromoléculaire du bloc de polymère themoplastique du polymère D sont reliées à un bloc de polyoxyde d'alkylène.

28. Procédé selon la revendication 18, **caractérisé en ce que** le polymère hyperbranché E est choisi parmi les polyesters, les polyesteramides, les polyamides.

29. Procédé selon la revendication 18 ou 28, **caractérisé en ce que** le polymère hyperbranché E est un copolyamide hyperbranché du type de ceux obtenus par réaction entre :
- au moins un monomère de formule **(I)** suivante :
(**I**) **A-**R**-B_{f}**
dans laquelle **A** est une fonction réactive de polymérisation d'un premier type, **B** est une fonction réactive de polymérisation d'un second type et capable de réagir avec **A,** R est une entité hydrocarbonée, et f est le nombre total de fonctions réactives **B** par monomère : f ≥ 2, de préférence 2 ≤ f ≤ 10 ;
- au moins un monomère de formule (**II**) suivante :
(**II**) **A**'-R'-**B**' ou les lactames correspondants,
dans laquelle **A', B', R'** ont la même définition que celle donnée ci-dessus respectivement pour **A, B, R** dans la formule (**I**)
- au moins un monomère « coeur » de formule (**III**) suivante ou au moins un monomère « limiteurs de chaîne » de formule (**IV**) suivante :
(**III**) R¹(**B**")ₙ
dans laquelle :
- R¹ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
- **B"** est une fonction réactive de même nature que **B** ou **B' ;**
- n ≥ 1, de préférence 1 ≤ n ≤ 100
(**IV**) R²-**A**"
dans laquelle :
- R² est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.
- et **A"** est une fonction réactive de même nature que **A** ou **A'.** le rapport molaire **I/II** se définissant comme suit :
0,05 < **I/II**
et de préférence 0,125 ≤ **I/II** ≤ 2 ;
au moins l'une des entités **R** ou **R'** d'au moins l'un des monomères (**I**) ou (**II**) étant aliphatique, cycloaliphatique ou arylaliphatique R₁ et/ou R₂ étant des radicaux polyoxyalkylènes

30. Procédé selon la revendication 29, **caractérisé en ce que** les fonctions réactives de polymérisation **A, B, A', B'** sont choisies dans le groupe comprenant les fonctions carboxyliques et amines.

31. Procédé selon la revendication 39 ou 30, **caractérisé en ce que** le monomère de formule (**I**) est un composé dans lequel **A** représente la fonction amine, **B** la fonction carboxylique, R un radical aromatique et f = 2

32. Procédé selon la revendication 31, **caractérisé en ce que** le composé B est choisi parmi les composés appartenant aux familles des polysaccharide, polyoxyalkylèneglycols, polyoléfines, silicones.

33. Procédé selon l'une des revendications précédentes, **caractérisé en ce que** le diamètre moyen des particules souhaité est compris entre 0.1 et 800 µm

## Claims

1. Process of manufacture of a thermoplastic material P powder comprising particles with a predetermined mean diameter of less than 1 mm, comprising the following stages:
a. forming a melt blend of said thermoplastic material P with at least one additive A in order to obtain a dispersion of discrete particles of the thermoplastic material P, said additive A being formed by a polymeric material having at least a portion of its structure compatible with said thermoplastic material P and at least a portion of its structure incompatible with and insoluble in said thermoplastic material P, in order to obtain a dispersion of discrete particles of a material,
b. cooling said blend to a temperature below the softening temperature of the thermoplastic material P,
c. treating said cold blend in order to bring about the separation of the discrete particles of thermoplastic material P,
**characterized in that** at least one compound B which is insoluble in and incompatible with the thermoplastic material P is introduced in stage a) in order to obtain particles with the desired mean diameter; the compound B has a structure compatible with at least a portion of the structure of the additive A;
the (weight of additive A + weight of compound B)/(weight of additive A + weight of compound B + weight of material P) ratio by weight R₁ is between 0.01 and 0.6.

2. Process according to Claim 1, **characterized in that** the formation of the blend is obtained by melting thermoplastic material P and adding the additive A and the compound B in the solid or molten form and applying a blending energy in order to obtain the formation of the discrete particles of thermoplastic material.

3. Process according to Claim 1, **characterized in that** the formation of the blend is obtained by blending particles of said thermoplastic material P and particles of said additive A and particles of said compound B in the solid state and melting the blend of particles with application to the melt blend of a blending energy in order to obtain the formation of discrete particles of thermoplastic material.

4. Process according to one of Claims 1 to 3,
**characterized in that** the concentration by weight of additive A in the blend is between 1% and 50%.

5. Process according to one of Claims 1 to 4,
**characterized in that** the concentration by weight of compound B in the blend is between 1% and 50%.

6. Process according to one of the preceding claims,
**characterized in that** the melt blend is shaped before the cooling stage.

7. Process according to Claim 6, **characterized in that** the shaping process is a process of extrusion through a die.

8. Process according to Claim 7, **characterized in that** the melt blend is produced in an extruder feeding the extrusion die.

9. Process according to one of the preceding claims,
**characterized in that** the cooling is pneumatic cooling.

10. Process according to one of Claims 1 to 8,
**characterized in that** the cooling is obtained by dipping in a liquid.

11. Process according to one of the preceding claims,
**characterized in that** the treatment for separation of the particles made of thermoplastic material P is obtained by application of a shear force to the cooled blend.

12. Process according to one of Claims 1 to 10,
**characterized in that** the treatment for separation of the particles made of thermoplastic material P is obtained by dipping the cooled melt blend in a liquid which is not a solvent for the thermoplastic material P.

13. Process according to Claim 12, **characterized in that** the liquid is a solvent for the additive A and the compound B.

14. Process according to one of the preceding claims,
**characterized in that** the thermoplastic polymer is a polyamide or a polyester.

15. Process according to Claim 14, **characterized in that** the thermoplastic polymer is a polyamide chosen from the group consisting of polyamide 6, polyamide 6,6, polyamide 11, polyamide 12, polyamides 4,6, 6,10, 6,12, 12,12 and 6, 36, their copolymers and their alloys.

16. Process according to one of the preceding claims,
**characterized in that** the thermoplastic polymer comprises additives chosen from the group consisting of matifying agents, heat and/or light stabilizers, pigments, dyes and fillers, in particular abrasive fillers.

17. Process according to one of the preceding claims,
**characterized in that** the additive A is a polymer of the block, sequence, comb, hyperbranched or star type.

18. Process according to Claim 17, **characterized in that** the structure compatible with the thermoplastic material constitutes a block of a block-type polymer, a sequence of a sequential polymer, the teeth of a comb polymer, or the core or the branches of a star or hyperbranched polymer.

19. Process according to one of the preceding claims,
**characterized in that** the compatible structure of the additive A comprises functional groups identical to those of the thermoplastic polymer.

20. Process according to one of the preceding claims,
**characterized in that** the additive A is a block copolymer D comprising a block of thermoplastic polymer and at least one block of polyalkylene oxide, such that:
• the block of thermoplastic polymer comprises a star or H macromolecular chain comprising at least one polyfunctional core and at least one branch or one segment of thermoplastic polymer connected to the core, the core comprising at least three identical reactive functional groups,
• the block or blocks of polyalkylene oxide are connected to at least a portion of the free ends of the star or H macromolecular chain chosen from the thermoplastic polymer branch or segment ends and the ends of the polyfunctional core.

21. Process according to Claim 20, **characterized in that** the star macromolecular chain of the block of thermoplastic polymer of the polymer D is a star polyamide obtained by copolymerization starting from a mixture of monomers comprising:
a) a polyfunctional compound comprising at least three identical reactive functional groups chosen from the amine functional group and the carboxylic acid functional group,
b) monomers of following general formulae (IIa) and/or (IIb): 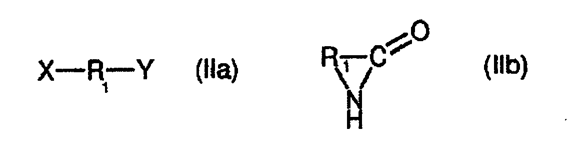
c) if appropriate, monomers of following general formula (III):
**Z-R₂-Z** **(III)**
in which:
• Z represents a functional group identical to that of the reactive functional groups of the polyfunctional compound,
• R₁ and R₂ represent identical or different, substituted or unsubstituted and aliphatic, cycloaliphatic or aromatic hydrocarbon radicals comprising from 2 to 20 carbon atoms which can comprise heteroatoms,
• Y is a primary amine functional group when X represents a carboxylic acid functional group, or
• Y is a carboxylic acid functional group when X represents a primary amine functional group.

22. Process according to Claim 20, **characterized in that** the H macromolecular chain of the block of thermoplastic polymer of the polymer D is an H polyamide obtained by copolymerization starting from a mixture of monomers comprising:
a) a polyfunctional compound comprising at least three identical reactive functional groups chosen from the amine functional group and the carboxylic acid functional group,
b) lactams and/or amino acids,
c) a difunctional compound chosen from dicarboxylic acids or diamines,
d) a monofunctional compound, the functional group of which is either an amine functional group or a carboxylic acid functional group,
the functional groups of c) and d) being amine when the functional groups of a) are acid, the functional groups of c) and d) being acid when the functional groups of a) are amine, the ratio as equivalents of the functional groups of a) to the sum of the functional groups of c) and d) being between 1.5 and 0.66, and the ratio as equivalents of the functional groups of c) to the functional groups of d) being between 0.17 and 1.5.

23. Process according to one of Claims 20 to 22,
**characterized in that** the polyfunctional compound is represented by the formula (IV): 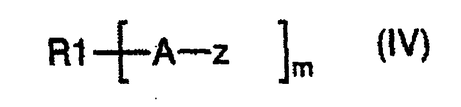 in which:
• R1 is a linear or cyclic and aromatic or aliphatic hydrocarbon radical comprising at least two carbon atoms which can comprise heteroatoms,
• A is a covalent bond or an aliphatic hydrocarbon radical comprising from 1 to 6 carbon atoms,
• Z represents a primary amine radical or a carboxylic acid radical,
• m is an integer between 3 and 8.

24. Process according to one of Claims 20 to 23,
**characterized in that** the polyfunctional compound is chosen from 2,2,6,6-tetra(β-carboxyethyl)cyclohexanone, trimesic acid, 2,4,6-tri(aminocaproic acid)-1,3,5-triazine or 4-aminoethyl-1,8-octanediamine.

25. Process according to one of Claims 20 to 24,
**characterized in that** the block of polyalkylene oxide of the polymer D is linear.

26. Process according to Claim 25, **characterized in that** the block of polyalkylene oxide of the polymer D is a block of polyethylene oxide.

27. Process according to one of Claims 20 to 26,
**characterized in that** the free ends of the macramolecular chain of the block of thermoplastic polymer of the polymer D are connected to a block of polyalkylene oxide.

28. Process according to Claim 18, **characterized in that** the hyperbranched polymer E is chosen from polyesters, polyesteramides or polyamides.

29. Process according to Claim 18 or 28, **characterized in that** the hyperbranched polymer E is a hyperbranched copolyamide of the type of those obtained by reaction between:
- at least one monomer of following formula (**I**):
(**I**) **A**-R-**B**_{f}
in which **A** is a polymerization reactive functional group of a first type, **B** is a polymerization reactive functional group of a second type which is capable of reacting with **A,** R is a hydrocarbon entity and f is the total number of **B** reactive functional groups per monomer: f ≥ 2, preferably 2 ≤ f ≤ 10;
- at least one monomer of following formula (**II**):
(**II**) **A**'-R'-**B**' or the corresponding lactams,
in which **A**', **B**' and **R**' have the same definition as that given above for **A**, **B** and **R** respectively in the formula (**I**);
- at least one "core" monomer of following formula (**III**) or at least one "chain-limiting" monomer of following formula (**IV**):
(**III**) R¹(**B**")ₙ
in which:
- R¹ is a substituted or unsubstituted hydrocarbon radical of the silicone, linear or branched alkyl, aromatic, alkylaryl, arylalkyl or cycloaliphatic type which can comprise unsaturations and/or heteroatoms;
- **B**" is a reactive functional group of the same nature as **B** or **B**';
- n ≥ 1, preferably 1 ≤ n ≤ 100;
(**IV**) R²-**A**"
in which:
- R² is a substituted or unsubstituted hydrocarbon radical of the silicone, linear or branched alkyl, aromatic, arylalkyl, alkylaryl or cycloaliphatic type which can comprise one or more unsaturations and/or one or more heteroatoms;
- and **A**" is a reactive functional group of the same nature as **A** or **A**';
the molar ratio **I/II** being defined as follows:
0.05 < **I/II,**
and preferably 0.125 ≤ **I/II ≤** 2;
at least one of the entities **R** or **R**' of at least one of the monomers (**I**) or (**II**) being aliphatic, cycloaliphatic or arylaliphatic;
R₁ and/or R₂ being polyoxyalkylene radicals.

30. Process according to Claim 29, **characterized in that** the polymerization reactive functional groups **A**, **B**, **A**' and **B**' are chosen from the group consisting of carboxyl and amine functional groups.

31. Process according to Claim 29 or 30, **characterized in that** the monomer of formula (**I**) is a compound in which **A** represents the amine functional group, **B** represents the carboxyl functional group, R represents an aromatic radical and f = 2.

32. Process according to Claim 31, **characterized in that** the compound B is chosen from compounds belonging to the families of the polysaccharides, polyoxyalkylene glycols, polyolefins and silicones.

33. Process according to one of the preceding claims,
**characterized in that** the desired mean diameter of the particles is between 0.1 and 800 µm.

## Patentansprüche

1. Verfahren zur Herstellung von Pulver aus thermoplastischem Material P, umfassend Teilchen mit einem mittleren Durchmesser von weniger als 1 mm, bei dem man:
a. eine schmelzflüssige Mischung des thermoplastischen Materials P mit mindestens einem Additiv A zum Erhalt einer Dispersion von diskreten Teilchen des thermoplastischen Materials P bildet, wobei das Additiv A durch ein Polymermaterial mit einer Struktur, die zumindest zum Teil mit dem thermoplastischen Material P verträglich ist und zumindest zum Teil unverträglich und in dem thermoplastischen Material P unlöslich ist, gebildet wird, zum Erhalt einer Dispersion von diskreten Materialteilchen,
b. die Mischung auf eine Temperatur unter der Erweichungstemperatur des thermoplastischen Materials P abkühlt,
c. die abgekühlte Mischung zur Bewirkung des Zerfalls der diskreten Teilchen aus dem thermoplastischen Material P behandelt,
**dadurch gekennzeichnet, daß** man in Schritt a) mindestens eine unlösliche und nicht mit dem thermoplastischen Material P verträgliche Verbindung B zum Erhalt von Teilchen mit dem gewünschten mittleren Durchmesser einträgt; die Verbindung B eine mit zumindest einem Teil der Struktur des Additivs A verträgliche Struktur aufweist und das Gewichtsverhältnis R₁ (Gewicht von Additiv A + Gewicht von Verbindung B)/(Gewicht von Additiv A + Gewicht von Verbindung B + Gewicht von Material P) zwischen 0,1 und 0,6 liegt.

2. Verfahren nach Anspruch 1, **dadurch gekennzeichnet, daß** die Bildung der Mischung durch Schmelzen von thermoplastischem Material P und Zugabe des Additivs A und der Verbindung B in fester oder schmelzflüssiger Form und Anwendung einer Mischenergie zum Erhalt der Bildung von diskreten Teilchen aus thermoplastischem Material erhalten wird.

3. Verfahren nach Anspruch 1, **dadurch gekennzeichnet, daß** die Bildung der Mischung durch Mischen von Teilchen aus dem thermoplastischen Material P und Teilchen des Additivs A und Teilchen der Verbindung B in festem Zustand und Schmelzen des Teilchengemischs mit Anwendung einer Mischenergie auf die schmelzflüssigen Teilchen zum Erhalt der Bildung von diskreten Teilchen aus thermoplastischem Material erhalten wird.

4. Verfahren nach einem der Ansprüche 1 bis 3, **dadurch gekennzeichnet, daß** die Konzentration an Additiv A in der Mischung zwischen 1 und 50 Gew.-% liegt.

5. Verfahren nach einem der Ansprüche 1 bis 4, **dadurch gekennzeichnet, daß** die Konzentration an Verbindung B in der Mischung zwischen 1 und 50 Gew.-% liegt.

6. Verfahren nach einem der vorhergehenden Ansprüche, **dadurch gekennzeichnet, daß** man die schmelzflüssige Mischung vor dem Abkühlschritt formt.

7. Verfahren nach Anspruch 6, **dadurch gekennzeichnet, daß** es sich bei dem Formgebungsschritt um ein Verfahren der Extrusion durch eine Düse handelt.

8. Verfahren nach Anspruch 7, **dadurch gekennzeichnet, daß** man die schmelzflüssige Mischung in einem die Extrusionsdüse speisenden Extruder durchführt.

9. Verfahren nach einem der vorhergehenden Ansprüche, **dadurch gekennzeichnet, daß** es sich bei dem Abkühlen um ein Abkühlen mit Druckluft handelt.

10. Verfahren nach einem der Ansprüche 1 bis 8,
**dadurch gekennzeichnet, daß** man das Abkühlen durch Eintauchen in eine Flüssigkeit erhält.

11. Verfahren nach einem der vorhergehenden Ansprüche, **dadurch gekennzeichnet, daß** man die Zerfallsbehandlung der Teilchen aus dem thermoplastischen Material P durch Anwendung einer Scherkraft auf die abgekühlte Mischung erhält.

12. Verfahren nach einem der Ansprüche 1 bis 10,
**dadurch gekennzeichnet, daß** man die Zerfallsbehandlung der Teilchen aus dem thermoplastischen Material P durch Eintauchen der abgekühlten schmelzflüssigen Mischung in eine Flüssigkeit, bei der es sich um ein Nichtlösungsmittel für das thermoplastische Material P handelt, erhält.

13. Verfahren nach Anspruch 12, **dadurch gekennzeichnet, daß** es sich bei der Flüssigkeit um ein Lösungsmittel für das Additiv A und die Verbindung B handelt.

14. Verfahren nach einem der vorhergehenden Ansprüche, **dadurch gekennzeichnet, daß** es sich bei dem thermoplastischen Polymer um ein Polyamid oder einen Polyester handelt.

15. Verfahren nach Anspruch 14, **dadurch gekennzeichnet, daß** es sich bei dem thermoplastischen Polymer um ein Polyamid aus der Gruppe bestehend aus Polyamid 6, Polyamid 6,6, Polyamid 11, Polyamid 12, Polyamid. 4,6, Polyamid 6,10, Polyamid 6,12, Polyamid 12,12, Polyamid 6,36, Copolymeren und Legierungen davon handelt.

16. Verfahren nach einem der vorhergehenden Ansprüche, **dadurch gekennzeichnet, daß** das thermoplastische Polymer Additive aus der Gruppe bestehend aus Mattierungsmitteln, Wärme- und/oder Lichtstabilisatoren, Pigmenten, Farbmitteln und Füllstoffen, insbesondere abrasiven Füllstoffen, enthält.

17. Verfahren nach einem der vorhergehenden Ansprüche, **dadurch gekennzeichnet, daß** es sich bei dem Additiv A um ein Blockpolymer, Sequenzpolymer, Kammpolymer, hyperverzweigtes Polymer oder Sternpolymer handelt.

18. Verfahren nach Anspruch 17, **dadurch gekennzeichnet, daß** es sich bei der mit dem thermoplastischen Material verträglichen Struktur um einen Block eines Blockpolymers, eine Sequenz eines Sequenzpolymers, die Zähne eines Kammpolymers, den Kern oder die Verzweigungen eines Sternpolymers oder hyperverzweigten Polymers handelt.

19. Verfahren nach einem der vorhergehenden Ansprüche, **dadurch gekennzeichnet, daß** die mit dem Additiv A verträgliche Struktur die gleichen Funktionen enthält wie das thermoplastische Polymer.

20. Verfahren nach einem der vorhergehenden Ansprüche, **dadurch gekennzeichnet, daß** es sich bei dem Additiv A um ein solches Blockcopolymer D mit einem Block aus thermoplastischem Polymer und mindestens einem Polyalkylenoxid-Block handelt, daß:
• der Block aus thermoplastischem Polymer eine sternförmige makromolekulare Kette oder H mit mindestens einem multifunktionellen Kern und mindestens einer Verzweigung oder einem an den Kern gebundenen Segment aus thermoplastischem Polymer enthält, wobei der Kern mindestens drei identische reaktive Funktionen enthält,
• der oder die Polyalkylenoxid-Blöcke an mindestens einen Teil der freien Enden der sternförmigen makromolekularen Kette oder H, ausgewählt unter Enden einer Verzweigung oder eines Segments aus thermoplastischem Polymer und Enden des multifunktionellen Kerns, gebunden sind.

21. Verfahren nach Anspruch 20, **dadurch gekennzeichnet, daß** die sternförmige makromolekulare Kette des Blocks aus thermoplastischem Polymer des Polymers D ein durch Copolymerisation einer Monomerenmischung, enthaltend:
a) eine multifunktionelle Verbindung mit mindestens drei identischen reaktiven Funktionen, ausgewählt unter der Aminfunktion und der Carbonsäurefunktion,
b) Monomere der folgenden allgemeinen Formeln (IIa) und/oder (IIb): 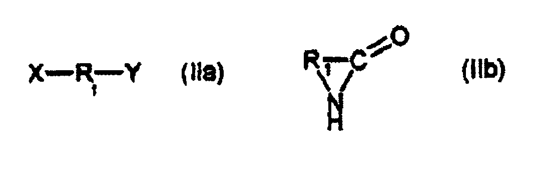
c) gegebenenfalls Monomere der folgenden allgemeinen Formel (III):
Z-R₂-Z (III)
worin:
• Z für eine Funktion steht, die mit den reaktiven Funktionen der multifunktionellen Verbindung identisch ist,
• R₁ und R₂ für gleiche oder verschiedene gegebenenfalls substituierte aliphatische, cycloaliphatische oder aromatische Kohlenwasserstoffreste, die 2 bis 20 Kohlenstoffatome aufweisen und Heteroatoame enthalten können, stehen,
• Y für eine primäre Aminfunktion steht, wenn X für eine Carbonsäurefunktion steht, und
• Y für eine Carbonsäurefunktion steht, wenn X für eine primäre Aminfunktion steht,
erhaltenes sternförmiges Polyamid ist.

22. Verfahren nach Anspruch 20, **dadurch gekennzeichnet, daß** die makromolekulare Kette H des Blocks aus thermoplastischem Polymer des Polymers D ein durch Copolymerisation einer Monomerenmischung, enthaltend:
a) eine multifunktionelle Verbindung mit mindestens drei identischen reaktiven Funktionen, ausgewählt unter der Aminfunktion und der Carbonsäurefunktion,
b) Lactame und/oder Aminosäuren,
c) eine difunktionelle Verbindung, ausgewählt unter Dicarbonsäuren oder Diaminen,
d) eine monofunktionelle Verbindung, bei deren Funktion es sich um eine Aminfunktion oder eine Carbonsäurefunktion handelt,
wobei es sich bei den Funktionen von c) und d) um Amin handelt, wenn es sich bei den Funktionen von a) um Säure handelt, es sich bei den Funktionen von c) und d) um Säure handelt, wenn es sich bei den Funktionen von a) um Amin handelt, das Äquivalentverhältnis zwischen den funktionellen Gruppen von a) und der Summe der funktionellen Gruppen von c) und d) zwischen 1,5 und 0,66 liegt und das Äquivalentverhältnis zwischen den funktionellen Gruppen von c) und den funktionellen Gruppen von d) zwischen 0,17 und 1,5 liegt, erhaltenes Polyamid H ist.

23. Verfahren nach einem der Ansprüche 20 bis 22, **dadurch gekennzeichnet, daß** die multifunktionelle Verbindung durch die Formel (IV) wiedergegeben wird: 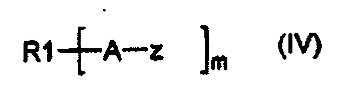 worin:
• R₁ für einen linearen oder cyclischen aromatischen oder aliphatischen Kohlenwasserstoffrest mit mindestens zwei Kohlenstoffatomen, der Heteroatome enthalten kann, steht,
• A für eine kovalente Bindung oder einen aliphatischen Kohlenwasserstoffrest mit 1 bis 6 Kohlenstoffatomen steht,
• Z für einen primären Aminrest oder einen Carbonsäurerest steht,
• m für eine ganze Zahl zwischen 3 und 8 steht.

24. Verfahren nach einem der Ansprüche 20 bis 23, **dadurch gekennzeichnet, daß** man die multifunktionelle Verbindung unter 2,2,6,6-Tetra(β-carboxyethyl)cyclohexanon, Trimesinsäure, 2,4,6-Tri-(aminocapronsäure)-1,3,5-triazin und 4-Aminoethyl-1,8-octandiamin auswählt.

25. Verfahren nach einem der Ansprüche 20 bis 24, **dadurch gekennzeichnet, daß** der Polyalkylenoxid-Block des Polymers D linear ist.

26. Verfahren nach Anspruch 25, **dadurch gekennzeichnet, daß** es sich bei dem Polyalkylenoxid-Block des Polymers D um einen Polyethylenoxid-Block handelt.

27. Verfahren nach einem der Ansprüche 20 bis 26, **dadurch gekennzeichnet, daß** die freien Enden der makromolekularen Kette des Blocks aus thermoplastischem Polymer des Polymers D an einen Polyalkylenoxid-Block gebunden sind.

28. Verfahren nach Anspruch 18, **dadurch gekennzeichnet, daß** das hyperverzweigte Polymer E unter Polyestern, Polyesteramiden und Polyamiden ausgewählt ist.

29. Verfahren nach Anspruch 18 oder 28, **dadurch gekennzeichnet, daß** es sich bei dem hyperverzweigten Polymer E um ein hyperverzweigtes Copolyamid vom Typ derjenigen handelt, die durch Umsetzung von:
- mindestens einem Monomer der folgenden Formel (I):
(I) A-R-B_{f}
worin A für eine polymerisationsreaktive Funktion eines ersten Typs steht, B für eine polymerisationsreaktive Funktion eines zweiten Typs steht und mit A reagieren kann, R für eine Kohlenwasserstoffeinheit steht und f für die Gesamtzahl an reaktiven Funktionen B pro Monomer steht: f ≥ 2, vorzugsweise 2 ≤ f ≤ 10;
- mindestens einem Monomer der folgenden Formel (II):
(II) A'-R'-B' oder den entsprechenden Lactamen
worin A' , B' und R' wie oben für A, B und R in Formel (I) definiert sind,
- mindestens einem "Kern"-Monomer der folgenden Formel (III) oder mindestens einem "Kettenabbruch"-Monomer der folgenden Formel (IV):
(III) R¹(B" )ₙ
worin:
- R¹ für einen gegebenenfalls substituierten Kohlenwasserstoffrest vom Typ Silikon, Typ lineares oder verzweigtes Alkyl, aromatischen Typ, Typ Alkylaryl, Typ Arylalkyl oder cycloaliphatischen Typ, der Ungesättigtheiten und/oder Heteroatome enthalten kann, steht;
- B" für eine reaktive Funktion der gleichen Art wie B oder B' steht;
- n ≥ 1, vorzugsweise 1 ≤ n ≤100;
(IV) R²-A"
worin:
- R² für einen gegebenenfalls substituierten Kohlenwasserstoffrest vom Typ Silikon, Typ lineares oder verzweigtes Alkyl, aromatischen Typ, Typ Arylalkyl, Typ Alkylaryl oder cycloaliphatischen Typ, der eine oder mehrere Ungesättigtheiten und/oder eine oder mehrere Heteroatome enthalten kann, steht;
- und A" für eine reaktive Funktion der gleichen Art wie A oder A' steht;
wobei das Molverhältnis I/II folgendermaßen definiert ist:
0,05 < I/II
und vorzugsweise 0,125 ≤ I/II ≤ 2;
wobei mindestens eine der Einheiten R oder R' mindestens eines der Monomere (I) oder (II) aliphatisch, cycloaliphatisch oder arylaliphatisch ist,
wobei R₁ und/oder R₂ Polyoxyalkylenreste sind, erhalten werden.

30. Verfahren nach Anspruch 29, **dadurch gekennzeichnet, daß** man die polymerisationsreaktiven Funktionen A, B, A' und B' aus der Gruppe bestehend aus Carboxyl- und Aminfunktionen auswählt.

31. Verfahren nach Anspruch 29 oder 30, **dadurch gekennzeichnet, daß** es sich bei dem Monomer der Formel (I) um eine Verbindung handelt, in der A für eine Aminfunktion steht, B für eine Carboxylfunktion steht, R für einen aromatischen Rest steht und f = 2 ist.

32. Verfahren nach Anspruch 31, **dadurch gekennzeichnet, daß** man die Verbindung B unter Verbindungen aus den Familien der Polysaccharide, Polyoxyalkylenglykole, Polyolefine oder Silikone auswählt.

33. Verfahren nach einem der vorhergehenden Ansprüche, **dadurch gekennzeichnet, daß** der gewünschte mittlere Durchmesser der Teilchen zwischen 0,1 und 800 µm liegt.
